# EUROPEAN PATENT APPLICATION

(11) **EP 3 667 556 A1**
(43) Date of publication of application: **17.06.2020**
(21) Application number: 18212102.0
(22) Date of filing: 12.12.2018
(51) Int. Cl.: G06K 9/00

(54) **AUTONOMOUS LANE CHANGE**

(71) Applicant: Visteon Global Technologies, Inc., Van Buren Township, Michigan 48111-5711 (US)
(72) Inventor: VERONESE, Lucas, 76227 Karlsruhe (DE); SHANTIA, Amirhossein, 76199 Karlsruhe (DE); PATHAK, Shashank, 76227 Karlsruhe (DE)
(74) Representative: Dummett Copp LLP

(57) **Abstract**

This disclosure relates to system, and method for automatically initiating a change of lane in an automated automotive vehicle, and in particular relates to the optimization and use of a SAE Level-4 automated lane change system that employs reinforcement learning. Sensory data (8) is combined in a sensory fusion processor (37) to generate a stack of semantic images (26, 27, 28) of a sensed vehicular driving environment (1). The stack is used in a reinforcement learning system using a Markov Decision Process in order to optimize a neural network of an automated lane change system (90).

## Description

### FIELD OF THE INVENTION

This disclosure relates to system, and method for automatically initiating a change of lane in an automated automotive vehicle, and in particular relates to the optimization and use of a SAE Level-4 automated lane change system that employs reinforcement learning.

### BACKGROUND TO THE INVENTION

Automated self-driving automotive vehicles (sometimes called autonomous vehicles), particularly cars, are capable of sensing the surrounding environment and moving and manoeuvring with little or no human input. Automated cars typically combine a variety of sensors to perceive their surroundings, such as radar, computer vision, Lidar, sonar, GPS, odometry and inertial measurements. Automated control systems interpret the sensory information to identify appropriate navigation paths, as well as obstacles and relevant signage.

The standards body SAE International defines the second highest level of automated driving system as "Level 4", in which the driving mode-specific performance by an automated driving system controls all aspects of the dynamic driving task, even if a human driver does not respond appropriately to a request to intervene.

One of the more difficult manoeuvres to perform safely is a lane change, for example to maintain a desired set speed by moving out into a faster lane, or to move back into a slower lane to allow following traffic to overtake. It is particularly difficult to automate the decision in real time as to when it is safe to make a lane change.

Most currently available lane change systems either require human input to initiate a lane change, and so are below Level 4, or employ constraint-based or decision tree-based approaches to guide a vehicle through an automatic lane change. Such techniques are computationally intensive.

It is an object of the current disclosure to provide a more convenient and efficient system and method for automatically initiating a change of lane in an automated automotive vehicle.

### SUMMARY OF THE INVENTION

One aspect of this disclosure relates to a method of optimizing an automated lane change system for use with a vehicular automated driving system of an ego vehicle, the lane change system comprising a plurality of sensory inputs each for receiving corresponding sensory data, a sensory fusion processor for combining the sensory data, and a reinforcement learning system. Sensory data from disparate sources is provided to the sensory inputs, this data being representative of a sensed vehicular driving environment of the ego vehicle.

The vehicular driving environment comprises at least two lanes of traffic flowing along the same roadway. The sensory data is combined in the sensory fusion processor to generate a semantic image of the sensed vehicular driving environment. The semantic image is a simplified static representation in two dimensions of the vehicular driving environment at the time the sensory data was provided to the sensory inputs. The dimensions extend along the roadway both ahead and behind the ego vehicle and laterally across the roadway lanes.

The sensory fusion processor is used to repeatedly generate the semantic images. The semantic images together provide a sequence of at least two of the static representations of the vehicular driving environment at corresponding times during which the ego vehicle travels in a first one of the lanes along the roadway.

The semantic images are then provided to a reinforcement learning system that employs a Markov Decision Process (MDP). The two dimensions of each semantic image are divided into cells and provide to the MDP a MDP grid-world. The ego vehicle is represented as an agent in the MDP. The lane in which the ego vehicle travels is represented by an agent state in the MDP grid-world.

Reinforcement learning is then used to solve the MDP for a change of the agent state representing a successful change of lane of the ego vehicle.

The solution of the MDP is then used in the automated lane change system, whereby, in use, the automated lane change system provides at an output of the automated lane change system a signal representative of a yes/no decision for initiating a lane change during automated driving of the ego vehicle by the vehicular automated driving system.

In the above optimization method, the sensory data is preferably provided by a driving simulation system that provides simulated real-world data.

Preferably the semantic image is stripped of information representing curves in the lanes of the vehicular driving environment.

Preferably, lane width is sensed so that an average lane width is generated and used for the semantic image.

Most preferably the lanes in the semantic image are represented by parallel arrays of the cells in the MDP grid-world.

The cells will, in general, be rectangular or square cells with sides aligned parallel and perpendicular to a longitudinal direction of the lanes,

Preferably, the ego vehicle and each other vehicle sensed in the vehicular driving environment in the sematic image is represented by a block of the cells in the MDP grid-world.

Each of these blocks preferably has the same size and shape regardless of a sensed length or width of each of the other vehicles.

The leading edge of each block representing a vehicle behind the ego vehicle on the roadway then corresponds with a sensed front edge of this particular vehicle.

The trailing edge of each block representing a vehicle in front of the ego vehicle on the roadway then corresponds with a sensed rear edge of this particular vehicle.

Another aspect of this disclosure relates to a method of using a vehicular automated driving system to drive automatically an ego vehicle in a vehicular driving environment comprising at least two lanes of traffic flowing along the same roadway.

The vehicular automated driving system comprises an automated lane change system, the lane change system comprising a plurality of sensory inputs each for receiving corresponding sensory data, a sensory fusion processor for combining the sensory data, and a neural network for generating a yes / no decision for initiating a lane change from a first lane of the roadway to a second lane of the roadway. The method comprises:
- providing to the sensory inputs the sensory data from disparate sources, the data being representative of the vehicular driving environment of the ego vehicle;
- combining the sensory data in the sensory fusion processor to generate a semantic image of the sensed vehicular driving environment, the semantic image being a simplified static grid-like representation in two dimensions of the vehicular driving environment at the time the sensory data was provided to the sensory inputs the dimensions extending along the roadway both ahead and behind the ego vehicle and laterally across the roadway lanes;
- using the sensory fusion processor to repeatedly generate the semantic images, the semantic images providing a sequence of at least two of the static representations of the vehicular driving environment at corresponding times during which the ego vehicle travels in a first one of the lanes along the roadway; and
- providing the semantic images to a neural network of the automated lane change system, the neural network processing the sequence of grid-like representations to generate a yes/no decision for initiating a lane change of the ego vehicle from the first lane to the second lane.

Then, when the decision is in the affirmative, the vehicular automated driving system is used to calculate a trajectory for the forthcoming lane change, and after the trajectory has been calculated, the vehicular automated driving system is used to move the vehicle from the first lane to the second lane along the calculated trajectory.

The semantic image may be stripped of information representing roadway curves so that lanes in the semantic image are represented by parallel strips in the grid-like representation in two dimensions of the vehicular driving environment.

The ego vehicle and each other vehicle sensed in the vehicular driving environment in the sematic image may be represented by blocks in the grid-like representation in two dimensions of the vehicular driving environment.

Each of the blocks most preferably has the same size and shape regardless of a sensed length or width of each of the other vehicles.

The leading edge of each block preferably represents a sensed front edge of a following vehicle on the roadway.

The trailing edge of each block preferably represents a sensed trailing edge of a leading vehicle o the roadway.

Another aspect of this disclosure relates to a vehicular automated driving system for driving automatically an ego vehicle in a vehicular driving environment, the environment comprising at least two lanes of traffic flowing along the same roadway, and the vehicular automated driving system comprising an automated lane change system, the lane change system comprising a plurality of sensory inputs each for receiving corresponding sensory data, a sensory fusion processor for combining the sensory data, and a neural network for generating a yes / no decision for initiating a lane change from a first lane of the roadway to a second lane of the roadway.

The vehicular automated driving system is configured, in use, to:
- provide to the sensory inputs the sensory data from disparate sources, the data being representative of the vehicular driving environment of the ego vehicle;
- combine the sensory data in the sensory fusion processor to generate a semantic image of the sensed vehicular driving environment, the semantic image being a simplified static grid-like representation in two dimensions of the vehicular driving environment at the time the sensory data was provided to the sensory inputs, the dimensions extending along the roadway both ahead and behind the ego vehicle and laterally across the roadway lanes;
- use the sensory fusion processor to repeatedly generate the semantic images, the semantic images providing a sequence of at least two of the static representations of the vehicular driving environment at corresponding times during which the ego vehicle travels in a first one of the lanes along the roadway; and
- provide the semantic images to the neural network of the automated lane change system, the neural network being configured, in use, to process the sequence of grid-like representations to generate a yes/no decision for initiating a lane change of the ego vehicle from the first lane to the second lane.

The vehicular automated driving system then acts on the decision being in the affirmative to calculate a trajectory for the forthcoming lane change, and after the trajectory has been calculated, act to control the vehicle, for example through a control data bus linked to a vehicle motor, steering system and braking system, to move the vehicle from the first lane to the second lane along the calculated trajectory.

The sensory data of the vehicle operating environment (which includes relevant vehicle operating parameters such as speed and acceleration) may be provided by any suitable sensors, depending on the vehicle operating parameter or the environmental physical feature to be sensed. Non-limiting example include a vehicle speed sensor, a vehicle accelerometer, radar, computer vision, Lidar, sonar and Global Positioning System sensors.

### BRIEF DESCRIPTION OF THE DRAWINGS

Preferred embodiments will now be further described, by way of example only, and with reference to the accompanying drawings, in which:
Figure 1 is a schematic representation of a multi-lane road derived, for example, either from vehicular sensor data of an ego car or from a driving simulator system, showing how an ego car in a first lane is between two other vehicles in an adjacent second lane, prior to a decision to change lane to the second lane, this lane change then occurring along a subsequently calculated trajectory;
Figure 2 is a schematic representation similar to Figure 1, in which movement of the vehicles along the lanes is represented by a frame stack, the frames being across a sequence of time steps;
Figure 3 illustrates how the relatively realistic representation of Figure 1 can be reduced to a semantic image of the three vehicles and two lanes, in which superfluous information not relevant to a lane change decision, has been stripped;
Figure 4 is a frame stack of semantic images, the frame stack being analogous to the frame stack of Figure 2, with each semantic image being similar to that of Figure 3 and being derived either from vehicular sensor data of an ego car or from a driving simulator system;
Figure 5 shows a block schematic diagram of a system in which the semantic frame stack of Figure 4 is generated, and then used either in a Reinforcement Learning process and which, after the learning process is complete, also provides the basis for a system for automatically initiating a change of lane in an automated automotive vehicle automated;
Figure 6 is shows abstract blocks of the process flow used in the system of Figure 5; and
Figure 7 is a schematic diagram of an automated automotive vehicle including components from the system of Figure 5 after optimization, for automatically initiating a change of lane.

### DETAILED DESCRIPTION

The generation of a trajectory to be used in an automated lane change is normally generated in a vehicular automated driving system of an ego vehicle. The term "ego vehicle" conventionally means the vehicle under the control of the system, as opposed to other vehicles on the road. Calculations of possible trajectory calculations can then be used to assess whether or not the lane change can be successfully executed, before a final decision is taken to proceed with the manoeuvre.

A difficulty with this approach is the intensive nature of the trajectory calculations, which ideally must be completed and assessed in well less than 1 second, for there to be confidence that the vehicular environment has not shifted in an unfavourable way prior to committing to the lane change.

Alternatively, trajectory calculations can be continuously updated during execution of the lane change, but again this is computationally intensive.

Instead of focusing on trajectory generation, the system proposed in this disclosure considers it a problem to be dealt with completely separately from an automated decision on whether or not to commit to executing automatic lane change manoeuvre.

There is also no intention or need to infer the intention of driver for a lane change manoeuvre. On the contrary, lane change control is implemented as a completely autonomous system. In this autonomous sense only, is this proposal comparable with the systems that provide suggestions to drivers to initiate the lane change manually.

In this proposal, the decision to initiate the lane change and also to do it safely lies entirely in the control of a decision-making system that operates independently from a trajectory calculation system. Unlike some prior art systems that first build a dynamic probabilistic drivability map, the embodiments described herein use as an input a general state-space where no underlying assumption is made. The initial design and optimization of the system is done as a reinforcement learning problem. This approach can be readily combined with a general approach for automatic cruise control or in a fully automatically driven vehicle.

In order to make the lane change decision making process sufficiently general, this the decision to perform a lane change is framed as a Markovian Decision Process (MDP), with the autonomous vehicle as the agent.

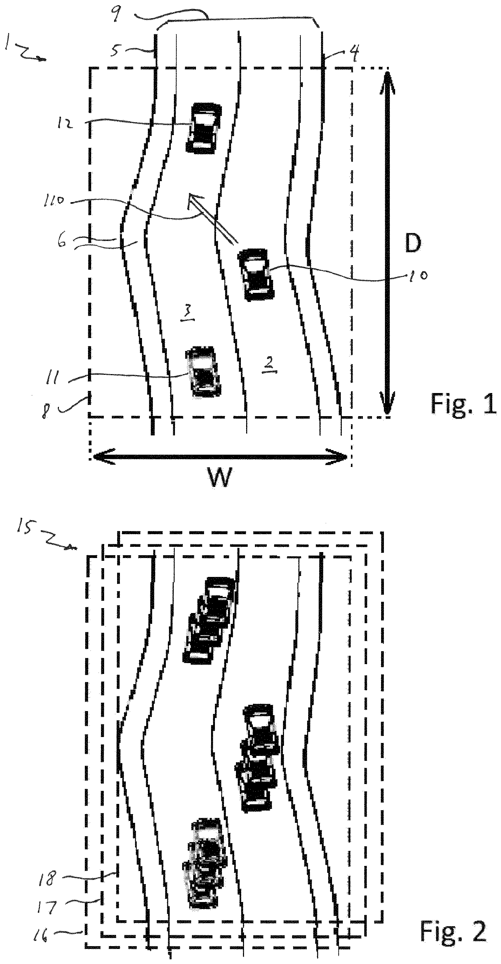

The sensed data of a vehicular driving environment 1 is depicted as an image 8 in Figure 1, and comprises information on at least two lanes 2, 3 and inner and outer road verges 4, 5 of a roadway 9, all of which may, in general be curved 6. In this example, an ego vehicle 10 is travelling forwards (down to up on the page) in a right hand first lane 2. Two other vehicles, one rearward 11 and one forward 12 are travelling forward in a left hand second lane 3.

The data covers an area W x D which may, for example, be 20 m wide (W) by 200 m long (D). In this example all the vehicles 10, 11, 12 are cars, but the vehicles could be any other vehicular types such as motor cycles or trucks.

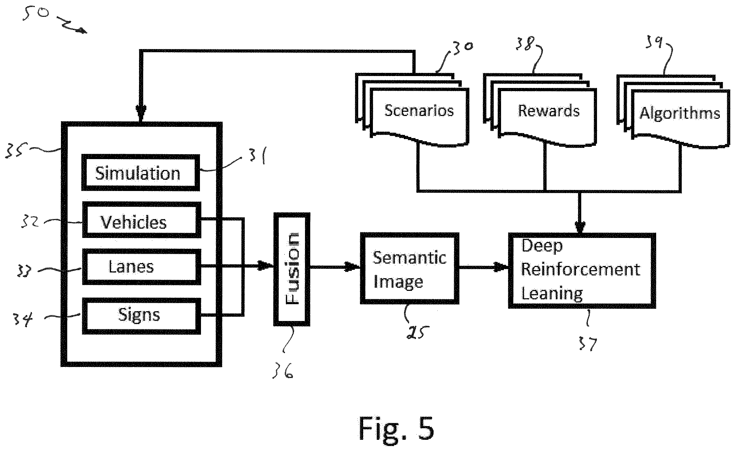

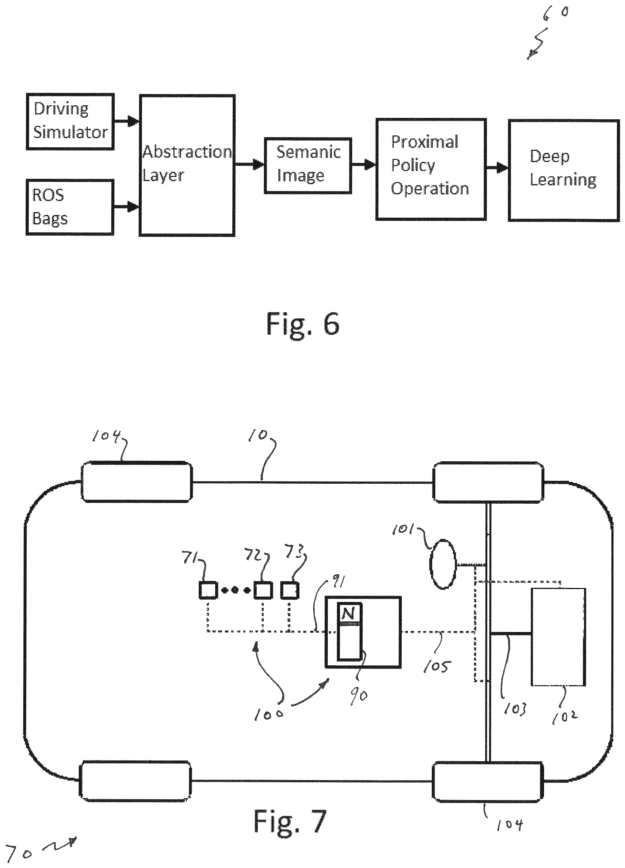

Figure 5 shows a schematic representation 50 of the system hardware used in optimization of the automated lane change system and Figure 6 shows a schematic representation 60 of the process steps in the optimization. Figure 7 illustrates schematically a motor vehicle 70 that includes an automated driving system 100 that includes an automated lane change system 90.

The sensory data of the vehicle operating environment (which includes relevant vehicle operating parameters such as speed and acceleration) may be provided by any suitable sensors 71, 72, 73, for example as mentioned above. But instead of using a huge set of real traffic data, the system optimization preferably relies on simulated data. State-of-the-art automotive grade simulators, such as those provided by Vires VTD (Trademark) are particularly good in situation generation and the optimization system makes use of this.

An automotive grade simulator 30 provides scenarios as shown in Figure 5, which together constitute a simulation 31 received by a sensory input stage 35. The simulation comprises data regarding the ego vehicle and other vehicles 32, lanes 33 and other features such as road signage 34.

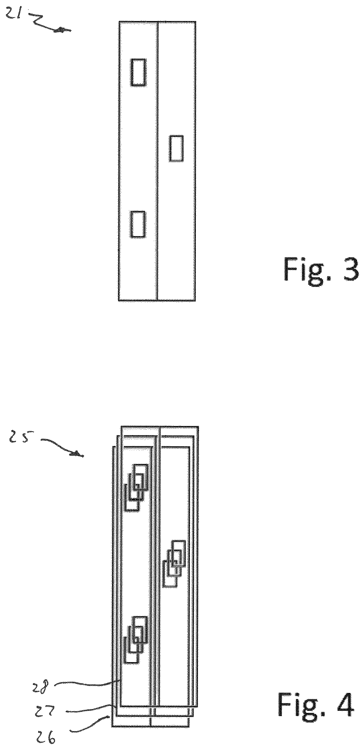

In this example, the ego vehicle 10 in the first lane 2 has to learn to change to a faster second lane 3 on the left. The state-space is shown in Figure 3 and 4.

Instead of considering only the state of the ego car 10 while deciding or evaluating an automated lane change, an extended state in space and time is considered as a state for the fully automated lane change. The computation problem is made tractable by considering a limited section of roadway. For example, 100 m both ahead and behind is considered as a suitable region for the state space.

The sensed data is a snapshot in time captured repeatedly, as illustrated schematically in the frame stack 15 of Figure 2, comprising at least two frames 16, 17, 18.

As shown in Figure 5, each frame 26, 27, 28 of the frame stack 25 is provided to the sensory fusion processor 36 which outputs a simplified representation of the vehicular environment in the form of the semantic image 21. Figure 3 illustrates a single semantic image 21 corresponding to the rear data of Figure 1. Figure 4 illustrates a stack 25 of semantic images 26, 27, 28 corresponding to the stacked data 16, 17, 18 of Figure 2.

The stacked original data 15 and corresponding stacked semantic data 25 are generated in real time at a rate 5 frames at 0.1 s, either from simulated data or from real data as the vehicle 10 is being driven on the roadway 9. The stacked sematic images exist in the extended state space.

Each from of semantic data 21 consists of digital data with a discrete resolution in two dimensions. In this example, the cells, or grids, of the semantic data are in a rectangular array extending 80 elements in the transverse direction (W) and 200 elements in the longitudinal direction (D). For the sake of clarity the grids or cells are not shown in Figures 3 and 4, but would be a grid overlaid the schematic representations.

When the problem is formulated in this way, it can be solved as a Markov Decision Process (MDP) using reinforcement learning 37, in which safe scenarios 30 for lane change are learned automatically, with the use of rewards 38 and algorithms 39 that implement the MDP.

Reinforcement learning 37 works particularly well where the control dynamics are spelt out implicitly. In this case, collision checking in the model is done implicitly. Hence the corner cases need not be hard-coded which reduces the chances of software bugs in a released product.

The same numerous simulated situations over while reinforcement learning is performed can also be readily used for validation of an optimized solution. In fact, a good learner with appropriate reward function is guaranteed to produce a valid control policy, which can be efficiently implemented as a neural network, subject to testing.

Another advantage of this approach is that the system can readily be extended. This is because unlike control theoretic approaches, no model is assumed. Rather the underlying model is sought to be learned through efficient simulation of the data.

Although a network based solution will, in general, be slower than a rule-based system (which typically would check some simple constraints and hence can run in order of micro-seconds), because the system uses semantic images to generate a yes/no decision on whether or not to implement a lane change, and is not concerned with calculating any lane change trajectories, it is fast enough for real-time lane change. This is ensured by making the underlying deep policy as a small network. In this example, the fully automated lane change algorithm with the underlying network has only 212 parameters (typical deep networks have several million parameters). This can run with 1000 Hz which is more than sufficient for making a fully automated lane change decision effectively in real time, for example in less than 0.1 s.

After optimization, the automated lane change system 90 is incorporated as part of the vehicular automated driving system 100 for driving automatically the ego vehicle 10 in the vehicular driving environment 1. The vehicle will, in general comprise also a steering system 101, an engine or motor 102 and a power train 103, which are linked by a data bus105 to the automated driving system 100, as well as a set of road going wheels linked to a braking system104.

The automated lane change system 90, comprises a plurality of sensory inputs 91 each for receiving corresponding sensory data from the plurality of sensors 71, 72, 73. The sensory fusion processor 36 combines the sensory data, and a neural network (N) for generating a yes / no decision for initiating a lane change from the first to the second lanes 2, 3 of the roadway 9.

The vehicular automated driving system 100 is configured, in use, to provide to the sensory inputs 91 the sensory data 8 from disparate sources, this data being representative of the vehicular driving environment 1 of the ego vehicle 10.

The sensory data 8 is then combined in the sensory fusion processor 36 to generate the semantic image 21 of the sensed vehicular driving environment. The semantic image is a simplified static grid-like representation in two dimensions of the vehicular driving environment 1 at the time the sensory data was provided to the sensory inputs 105. The two dimensions extending along the roadway both ahead and behind (D) ego vehicle 10 and laterally across (W) the lanes 2,3.

The sensory fusion processor 36 is used to repeatedly generate the semantic images 26, 27, 28, the semantic images providing a sequence of at least two of the static representations 16, 17, 18 of the vehicular driving environment 1 at corresponding times during which the ego vehicle 10 travels in the first lane 2 along the roadway 9.

The semantic images are then provided to the neural network (N) of the automated lane change system 90, and the neural network then processes the sequence of grid-like representations to generate a yes/no decision for initiating a lane change of the ego vehicle 10 from the first lane 2 to the second lane 3.

The vehicular automated driving system then acts on the decision being in the affirmative to calculate a trajectory 110 for the forthcoming lane change, and after the trajectory has been calculated, acts to control 101-105 the movement the vehicle 10 from the first lane 2 to the second lane 3 along the calculated trajectory 110.

The above embodiments therefore provide a convenient and efficient system and method for automatically initiating a change of lane in an automated automotive vehicle, particularly in a SAE Level-4 vehicular automated driving system.

## Claims

1. A method of optimizing an automated lane change system for use with a vehicular automated driving system of an ego vehicle, the lane change system comprising a plurality of sensory inputs each for receiving corresponding sensory data, a sensory fusion processor for combining said sensory data, and a reinforcement learning system, the method comprising the steps of:
- providing to said sensory inputs said sensory data from disparate sources, said data being representative of a sensed vehicular driving environment of said ego vehicle, said vehicular driving environment comprising at least two lanes of traffic flowing along the same roadway;
- combining said sensory data in the sensory fusion processor to generate a semantic image of said sensed vehicular driving environment, the semantic image being a simplified static representation in two dimensions of the vehicular driving environment at the time said sensory data was provided to said sensory inputs said dimensions extending along the roadway both ahead and behind said ego vehicle and laterally across said at two lanes;
- using the sensory fusion processor to repeatedly generate said semantic images, said semantic images providing a sequence of at least two of said static representations of the vehicular driving environment at corresponding times during which said ego vehicle travels in a first one of said lanes along the roadway; and
- providing said semantic images to a reinforcement learning system, the reinforcement learning system employing a Markov Decision Process (MDP) with the two dimensions of each semantic image being divided into cells and providing to the MDP a MDP grid-world, the ego vehicle being represented by an agent and the lane in which the ego vehicle travels being represented by an agent state in the MDP grid-world;
- using reinforcement learning to solve the MDP for a change of the agent state representing a successful change of lane of the ego vehicle; and
- embodying said solution of the MDP in the automated lane change system, whereby, in use, the automated lane change system provides at an output of the automated lane change system a signal representative of a yes/no decision for initiating a lane change during automated driving of the ego vehicle by the vehicular automated driving system.

2. A method as claimed in Claim 1, in which the semantic image is stripped of information representing curves in said at least two lanes of the vehicular driving environment, whereby said lanes in the semantic image are represented by parallel arrays of said cells in the MDP grid-world.

3. A method as claimed in Claim 1 or Claim 2, in which the ego vehicle and each other vehicle sensed in said vehicular driving environment in the sematic image is represented by a block of said cells in the MDP grid-world, each of said blocks having the same size and shape regardless of a sensed length or width of each of said other vehicles, and wherein:
- the leading edge of each block representing a vehicle behind the ego vehicle on the roadway corresponds with a sensed front edge of said vehicle behind the ego vehicle; and
- the trailing edge of each block representing a vehicle in front of the ego vehicle on the roadway corresponds with a sensed rear edge of said vehicle in front of the ego vehicle.

4. A method of using a vehicular automated driving system to drive automatically an ego vehicle in a vehicular driving environment comprising at least two lanes of traffic flowing along the same roadway, said vehicular automated driving system comprising an automated lane change system, the lane change system comprising a plurality of sensory inputs each for receiving corresponding sensory data, a sensory fusion processor for combining said sensory data, and a neural network for generating a yes / no decision for initiating a lane change from a first lane of said roadway to a second lane of said roadway, the method comprising:
- providing to said sensory inputs said sensory data from disparate sources, said data being representative of the vehicular driving environment of said ego vehicle;
- combining said sensory data in the sensory fusion processor to generate a semantic image of said sensed vehicular driving environment, the semantic image being a simplified static grid-like representation in two dimensions of the vehicular driving environment at the time said sensory data was provided to said sensory inputs, said dimensions extending along the roadway both ahead and behind said ego vehicle and laterally across said at two lanes;
- using the sensory fusion processor to repeatedly generate said semantic images, said semantic images providing a sequence of at least two of said static representations of the vehicular driving environment at corresponding times during which said ego vehicle travels in a first one of said lanes along the roadway; and
- providing said semantic images to the neural network of the automated lane change system, the neural network processing said sequence of grid-like representations to generate a yes/no decision for initiating a lane change of the ego vehicle from the first lane to the second lane; and
- when said decision is in the affirmative, using the vehicular automated driving system then to calculate a trajectory for the forthcoming lane change, and after the trajectory has been calculated, using the vehicular automated driving system to move the vehicle from the first lane to the second lane along said trajectory.

5. A method as claimed in Claim 4, in which the semantic image is stripped of information representing curves in said at least two lanes of the vehicular driving environment, whereby said lanes in the semantic image are represented by parallel strips in said grid-like representation in two dimensions of the vehicular driving environment.

6. A method as claimed in Claim 5 or Claim 6, in which the ego vehicle and each other vehicle sensed in said vehicular driving environment in the sematic image is represented by blocks in said grid-like representation in two dimensions of the vehicular driving environment, each of said blocks having the same size and shape regardless of a sensed length or width of each of said other vehicles, and wherein:
- the leading edge of each block representing a vehicle behind the ego vehicle on the roadway corresponds with a sensed front edge of said vehicle behind the ego vehicle; and
- the trailing edge of each block representing a vehicle in front of the ego vehicle on the roadway corresponds with a sensed rear edge of said vehicle in front of the ego vehicle.

7. A vehicular automated driving system for driving automatically an ego vehicle in a vehicular driving environment, said environment comprising at least two lanes of traffic flowing along the same roadway, and said vehicular automated driving system comprising an automated lane change system, the lane change system comprising a plurality of sensory inputs each for receiving corresponding sensory data, a sensory fusion processor for combining said sensory data, and a neural network for generating a yes / no decision for initiating a lane change from a first lane of said roadway to a second lane of said roadway, wherein the vehicular automated driving system is configured, in use, to:
- provide to said sensory inputs said sensory data from disparate sources, said data being representative of the vehicular driving environment of said ego vehicle;
- combine said sensory data in the sensory fusion processor to generate a semantic image of said sensed vehicular driving environment, the semantic image being a simplified static grid-like representation in two dimensions of the vehicular driving environment at the time said sensory data was provided to said sensory inputs, said dimensions extending along the roadway both ahead and behind said ego vehicle and laterally across said at two lanes;
- use the sensory fusion processor to repeatedly generate said semantic images, said semantic images providing a sequence of at least two of said static representations of the vehicular driving environment at corresponding times during which said ego vehicle travels in a first one of said lanes along the roadway; and
- provide said semantic images to the neural network of the automated lane change system, the neural network being configured, in use, to process said sequence of grid-like representations to generate a yes/no decision for initiating a lane change of the ego vehicle from the first lane to the second lane;
and wherein the vehicular automated driving system is configured, in use, to act on said decision being in the affirmative to calculate a trajectory for the forthcoming lane change, and after the trajectory has been calculated, to move the vehicle from the first lane to the second lane along said trajectory.
